# EUROPÄISCHE PATENTANMELDUNG

(11) **EP 3 989 029 A1**
(43) Veröffentlichungstag der Anmeldung: **27.04.2022**
(21) Anmeldenummer: 21200146.5
(22) Anmeldetag: 30.09.2021
(51) Int. Cl.: G05D 1/02

(54) **FAHRERLOSES TRANSPORTSYSTEM MIT EINEM WARTEPLATZ**

(30) Priorität: 22.10.2020 DE 102020127841
(71) Anmelder: Audi AG, 85045 Ingolstadt (DE)
(72) Erfinder: Schmidt, Jörg, 85053 Ingolstadt (DE)

(57) **Zusammenfassung**

Verfahren zum Betreiben eines fahrerlosen Transportsystems (FTS), bei dem ein fahrerloses Fahrzeug, d. h. fahrerloses Transportfahrzeug (FTF), eines fahrerlosen Transportsystems ein Transportgut zu einer Station eines modularen Stationensystems transportiert und das fahrerlose Fahrzeug das Transportgut an der Station abliefert, wenn ein Abliefern des Transportguts an der Station möglich ist; sowie fahrerloses Transportsystem für ein modulares Stationensystem.

## Beschreibung

Die Erfindung betrifft ein Verfahren zum Betreiben eines fahrerlosen Transportsystems (FTS), bei dem ein fahrerloses Fahrzeug, insbesondere fahrerloses Transportfahrzeug (FTF), eines fahrerlosen Transportsystems ein Transportgut zu einer Station eines modularen Stationensystems transportiert und das fahrerlose Fahrzeug das Transportgut an der Station abliefert, wenn ein Abliefern des Transportguts an der Station möglich ist. Ferner betrifft die Erfindung ein fahrerloses Transportsystem für ein modulares Stationensystem.

Fahrerlose Transportsysteme sind in unterschiedlichen Ausgestaltungen bekannt und dienen dazu, Transportgüter zwischen Stationen eines modularen Stationensystems zu transportieren. Das modulare Stationensystem kann als ein Montagesystem mit einer Mehrzahl von Montagestationen ausgebildet sein, wobei die Fahrzeuge Werkstücke zwischen den Montagestationen transportieren. Alternativ kann das modulare Stationensystem als ein Logistiksystem mit einer Mehrzahl von Lagerplätzen ausgebildet sein, wobei die Fahrzeuge Waren zwischen den Lagerplätzen transportieren.

Das fahrerlose Transportsystem umfasst in der Regel eine Mehrzahl von fahrerlosen Fahrzeugen, welche sich auf zumeist vorbestimmten Pfaden zwischen den Stationen bewegen. Das fahrerlose Transportsystem empfängt von einer Arbeitsplanungseinheit des modularen Stationensystems einen Arbeitsplan mit einer Mehrzahl von Transportaufträgen, welche jeweils einen Transport eines Transportguts zwischen zwei Stationen des modularen Stationensystems umfassen.

Die Transportaufträge werden den fahrerlosen Fahrzeugen von dem fahrerlosen Transportsystem nach einem bestimmten automatischen Verteilverfahren zugewiesen. Jedes Fahrzeug führt nacheinander die ihm zugewiesenen Transportaufträge aus, d. h. es nimmt ein Transportgut an einer Quellstation auf, fährt mit dem Transportgut zu einer Zielstation und liefert das Transportgut an der Zielstation ab. Ein Fahrzeug, welches keinen Transportauftrag ausführt, parkt auf einem vorbestimmten Parkplatz des fahrerlosen Transportsystems.

Die fahrerlosen Fahrzeuge können für ein autonomes Steuern, d. h. für eine Selbststeuerung, oder für ein externes Gesteuertwerden durch eine stationäre Steuerungseinheit des fahrerlosen Transportsystems ausgebildet sein. Zudem existieren Mischformen, welche sowohl Elemente eines autonomen Steuerns als auch Elemente eines externen Gesteuertwerdens umfassen.

Fahrerlose Transportsysteme mit autonom steuernden fahrerlosen Fahrzeugen sind beispielsweise in dem 2013 in "Logistics Journal: Not Reviewed" veröffentlichten Fachartikel "Selbstgesteuerte Fahrerlose Transportsysteme" von Christoph Schwarz et al. (DOI: 10.2195/lj_NotRev_schwarz_de_201312_01), der am 7. April 2014 von Christoph Schwarz vorgelegten Dissertationsschrift "Untersuchung zur Steigerbarkeit von Flexibilität, Performanz und Erweiterbarkeit von Fahrerlosen Transportsysteme durch den Einsatz dezentraler Steuerungstechniken" und dem Schlussbericht vom 26.09.2013 über das vom Bundesministerium für Wirtschaft und Technologie geförderten erfolgreichen Projektvorhaben 17237 N "Dezentrale, agentenbasierte Selbststeuerung von Fahrerlosen Transportsystemen (FTS)" beschrieben.

Unabhängig von der Steuerung der fahrerlosen Transportsysteme können sich die fahrerlosen Transportfahrzeuge wechselseitig behindern.

Beispielsweise kann eine Station durch ein vor der Station wartendes erstes fahrerloses Fahrzeug blockiert sein, so dass ein dahinter wartendes zweites fahrerloses Fahrzeug einen vorbestimmten Pfad blockiert und dadurch weitere fahrerlose Fahrzeuge behindert.

Zudem ist es möglich, dass das erste fahrerlose Fahrzeug nach dem erfolgreichen Abliefern seines Transportguts an der Station durch das dahinter stehende zweite fahrerlose Fahrzeug an einem Verlassen der Station und dem Ausführen eines weiteren Transportauftrags gehindert ist. Wenn der weitere Transportauftrag ein Abholen eines Transportguts von eben dieser Station umfasst, wartet die Station vergeblich auf das Abholen des ersten fahrerlosen Fahrzeugs und muss ihren Betrieb unterbrechen.

Eine solche Konstellation eines fahrerlosen Transportsystems wird gewöhnlich als Dead Lock bezeichnet. Ein Dead Lock kann auch mehrere Stationen und fahrerlose Fahrzeuge involvieren, wobei dann wechselseitige Behinderungen auch mittelbar, d. h. über eine Mehrzahl, d. h. eine Kette, von blockierten und blockierenden fahrerlosen Fahrzeugen, erfolgen. Ein Dead Lock kann ein manuelles Eingreifen einer Person erfordern und beeinträchtigt jedenfalls eine Zuverlässigkeit und eine Effizienz des fahrerlosen Transportsystems und mithin eine Produktivität des modularen Stationensystems.

Der Erfindung liegt daher die Aufgabe zugrunde, ein verbessertes Verfahren zum Betreiben eines fahrerlosen Transportsystems vorzuschlagen, welches eine Zuverlässigkeit des fahrerlosen Transportsystems verbessert und eine Effizienz des fahrerlosen Transportsystems erhöht. Ferner ist es eine Aufgabe der vorliegenden Erfindung, ein fahrerloses Transportsystem für ein modulares Stationensystem bereitzustellen.

Ein Gegenstand der Erfindung ist ein Verfahren zum Betreiben eines fahrerlosen Transportsystems, bei dem ein fahrerloses Fahrzeug eines fahrerlosen Transportsystems ein Transportgut zu einer Station eines modularen Stationensystems transportiert und das fahrerlose Fahrzeug das Transportgut an der Station abliefert, wenn ein Abliefern des Transportguts an der Station möglich ist. Das fahrerlose Fahrzeug kann sich zum Transportieren des Transportguts auf einem insbesondere von dem fahrerlosen Transportsystem vorbestimmten Pfad zu der Station, insbesondere zu einem Eingangspuffer der Station, bewegen. Ein Abliefern des Transportguts ist möglich, wenn die Station das Transportgut annehmen und das fahrerlose Fahrzeug die Station erreichen, insbesondere in einen Eingangspuffer der Station einfahren, kann. Dies ist immer dann der Fall, wenn ein Arbeitsplan einer Arbeitsplanungseinheit des modularen Stationensystems fehlerfrei und ein Betrieb der Stationen des modularen Stationensystems normal verläuft sowie das fahrerlose Transportsystem Transportaufträge abgestimmt auf den Arbeitsplan ausführt.

Bei dem erfindungsgemäßen Verfahren fährt das fahrerlose Fahrzeug mit dem Transportgut zu einem vorbestimmten Warteplatz des fahrerlosen Transportsystems, wenn ein Abliefern des Transportguts an der Station verhindert ist, wartet mit dem Transportgut auf dem vorbestimmten Warteplatz, bis ein Abliefern des Transportguts an der Station ermöglicht ist, und transportiert das Transportgut nach dem Warten zu der Station. Ein Warteplatz im Sinne der Erfindung dient also dem Warten von fahrerlosen Fahrzeugen mit Transportgut. Mit anderen Worten wird der Warteplatz von einem fahrerlosen Fahrzeug während eines Ausführens eines Transportauftrags genutzt, während ein Parkplatz von einem fahrerlosen Fahrzeug vor oder nach einem Ausführen eines Transportauftrags genutzt wird.

Das fahrerlose Fahrzeug fährt zu dem Warteplatz, wenn die Station das Transportgut nicht annehmen kann oder das fahrerlose Fahrzeug die Station nicht erreichen, insbesondere nicht in einen Eingangspuffer der Station, einfahren kann. Auf dem Warteplatz blockiert das fahrerlose Fahrzeug keinen vorbestimmten Pfad und behindert damit keine weiteren fahrerlosen Fahrzeuge.

Mit anderen Worten stellt das Warten des fahrerlosen Fahrzeugs auf dem Warteplatz sicher, dass keine vorbestimmten Pfade blockiert werden und weitere Fahrzeuge des fahrerlosen Transportsystems nicht durch eine Blockade behindert werden. Infolgedessen funktioniert das fahrerlose Transportsystem abgesehen von dem auf dem Warteplatz wartenden fahrerlosen Fahrzeug weiterhin normal. Ein Dead Lock des fahrerlosen Transportsystems wird dank des Wartens des fahrerlosen Fahrzeugs auf dem Warteplatz vermieden, wodurch ein manuelles Eingreifen einer Person zum Auflösen des Dead Locks obsolet ist. Jedes vermiedene Dead Lock verbessert eine Zuverlässigkeit des fahrerlosen Transportsystems und erhöht eine Effizienz des fahrerlosen Transportsystems.

In einer Ausführungsform verhindert ein weiteres fahrerloses Fahrzeug das Abliefern des Transportguts durch Blockieren eines dedizierten Eingangspuffers der Station. Die Station umfasst einen dedizierten Eingangspuffer und einen von dem dedizierten Eingangspuffer verschiedenen und beabstandet angeordneten dedizierten Ausgangspuffer. Die Station ist ausgebildet, jeweils ausschließlich von einem in dem dedizierten Eingangspuffer angeordneten fahrerlosen Fahrzeug ein Transportgut anzunehmen und ein Transportgut an ein in dem dedizierten Ausgangspuffer angeordnetes fahrerloses Fahrzeug abzugeben. Die Station kann gleichzeitig mit zwei fahrerlosen Fahrzeugen kooperieren.

In einer weiteren Ausführungsform verhindert ein weiteres fahrerloses Fahrzeug das Abliefern durch Blockieren eines gemeinsamen Eingangs- und Ausgangspuffers der Station. Die Station umfasst einen einzigen Puffer, welcher gleichermaßen ein Eingangspuffer und ein Ausgangspuffer der Station ist. Die Station kann zu jedem Zeitpunkt ausschließlich mit einem einzigen fahrerlosen Fahrzeug kooperieren, welches entweder ein Transportgut an der Station abliefert oder ein Transportgut an der Station aufnimmt.

Vorteilhaft fährt das fahrerlose Fahrzeug zu einem vorbestimmten globalen Warteplatz oder einem vorbestimmten der Station ausschließlich zugeordneten Warteplatz. Der vorbestimmte globale Warteplatz ist einer Mehrzahl von Stationen, insbesondere allen Stationen, des modularen Stationensystems zugeordnet und wird von jedem fahrerlosen Fahrzeug angefahren, welches ein Transportgut nicht an irgendeiner einer zugeordneten Station des modularen Montagesystems abliefern kann. Der vorbestimmte der Station ausschließlich zugeordnete Warteplatz wird dagegen ausschließlich von einem fahrerlosen Fahrzeug angefahren, welches ein Transportgut nicht an der ausschließlich zugeordneten Station abliefern kann. Der globale Warteplatz kann größer als der der Station ausschließlich zugeordnete Warteplatz ausgebildet sein. Der der Station ausschließlich zugeordnete Warteplatz kann benachbart zu der zugeordneten Station angeordnet sein, wodurch ein blockiertes fahrerloses Fahrzeug den Warteplatz und nach dem Warten die Station jeweils in kurzer Zeit erreichen kann. Auf diese Weise wird eine Verzögerung infolge des Wartens reduziert, was mit einer weiter erhöhten Effizienz des fahrerlosen Transportsystems einhergeht.

Idealerweise fährt das Fahrzeug zu einem vorbestimmten dedizierten Warteplatz. Der dedizierte Warteplatz dient ausschließlich dem Warten von fahrerlosen Fahrzeugen, welche ein Transportgut tragen, d. h. während eines Ausführens eines Transportauftrags. Alternativ dazu kann auch ein Parkplatz für ohne Transportauftrag wartende fahrerlose Fahrzeuge ohne Transportgut als der Warteplatz genutzt werden. Selbstverständlich kann ein fahrerloses Fahrzeug während eines Ausführens eines Transportauftrags auch wahlweise entweder einen dedizierten Warteplatz oder einen Parkplatz nutzen.

Bevorzugt steuert eine zentrale Steuerungseinheit des fahrerlosen Transportsystems das fahrerlose Fahrzeug oder eine Mehrzahl von fahrerlosen Fahrzeugen des fahrerlosen Transportsystems automatisch. Jedes fahrerlose Fahrzeug des fahrerlosen Transportsystems wird extern gesteuert. Alternativ können die Fahrzeuge des fahrerlosen Transportsystems auch autonom oder zusätzlich teilweise autonom steuern.

Ein weiterer Gegenstand der Erfindung ist ein fahrerloses Transportsystem für ein modulares Stationensystem, welches eine Mehrzahl von fahrerlosen Fahrzeugen zum Transportieren von Transportgütern zu Stationen eines modularen Stationensystems umfasst. Fahrerlose Transportsysteme werden vielfach in Kombination mit modularen Stationensystemen, welche eine Mehrzahl von Stationen umfassen, verwendet, so dass für die Erfindung viele Anwendungsmöglichkeiten bestehen.

Das erfindungsgemäße fahrerlose Transportsystem umfasst einen vorbestimmten Warteplatz und ist konfiguriert, ein Verfahren nach einem der Ansprüche 1 bis 6 auszuführen. Das fahrerlose Transportsystem vermeidet ein Dead Lock, was mit einer verbesserten Zuverlässigkeit und einer erhöhten Effizienz des fahrerlosen Transportsystems einhergeht.

Das fahrerloses Transportsystem ist vorteilhaft konfiguriert zu erfassen, ob ein dedizierter Eingangspuffer einer Station oder ein gemeinsamer Eingangsund Ausgangspuffer einer Station frei oder blockiert ist. Das fahrerlose Transportsystem kann eine Mehrzahl von Sensoren, beispielsweise von optischen Sensoren wie Kameras oder Ultraschallsensoren, umfassen, welche jeweils einem Eingangspuffer einer Station zugeordnet sind.

In vielen Ausführungsformen ist der vorbestimmte Warteplatz als ein vorbestimmter globaler Warteplatz oder ein vorbestimmter der Station ausschließlich zugeordneter Warteplatz oder ein vorbestimmter dedizierter Warteplatz konfiguriert. Die verschiedenen möglichen Varianten von Warteplätzen erlauben ein optimales Anpassen an räumliche Gegebenheiten des modularen Montagesystems, beispielsweise an eine Flächendichte der Stationen oder an Abstände zwischen den Stationen.

In einer bevorzugten Ausführungsform umfasst das fahrerlose Transportsystem eine Mehrzahl von vorbestimmten Warteplätzen. Bei mehreren vorbestimmten Warteplätzen kann mehreren Stationen, insbesondere jeder Station des modularen Stationensystems, jeweils ein Warteplatz ausschließlich zugeordnet sein und/oder können ein globaler Warteplatz oder mehrere globale Warteplätze definiert sein.

Weiterhin bevorzugt umfasst das fahrerlose Transportsystem eine zentrale Steuerungseinheit, welche konfiguriert ist, ein fahrerloses Fahrzeug oder jedes fahrerlose Fahrzeug automatisch zu steuern. Die zentrale Steuerungseinheit ist bezogen auf die fahrerlosen Fahrzeuge extern und kann stationär angeordnet sein und mit den fahrerlosen Fahrzeugen sowie vorhandenen Sensoren über ein drahtloses Netzwerk, beispielsweise ein Mobilfunknetz oder ein WLAN, kommunizieren.

Ein wesentlicher Vorteil des erfindungsgemäßen Verfahrens besteht darin, dass ein Dead Lock eines fahrerlosen Transportsystems aufgrund einer blockierten Station eines modularen Stationensystems vermieden wird. Jedes vermiedene Dead Lock verbessert eine Zuverlässigkeit und erhöht eine Effizienz des fahrerlosen Transportsystems. Infolgedessen ist eine Produktivität des modularen Stationensystems gesteigert.

Die Erfindung ist anhand von Ausführungsformen in den Zeichnungen schematisch dargestellt und wird unter Bezugnahme auf die Zeichnungen weiter beschrieben. Es zeigt:

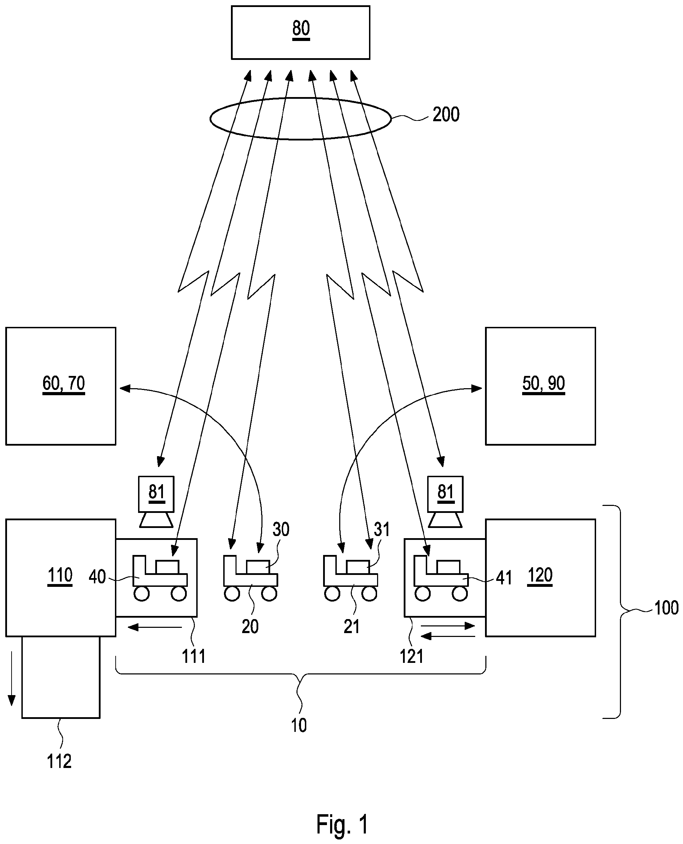

- Figur 1: in einem Blockdiagramm ein fahrerloses Transportsystem nach einer Ausführungsform der Erfindung.

Figur 1 zeigt in einem Blockdiagramm ein fahrerloses Transportsystem 10 nach einer Ausführungsform der Erfindung. Das fahrerlose Transportsystem 10 ist einem modularen Stationensystem 100, welches eine Mehrzahl von Stationen 110, 120 umfasst, zugeordnet und auf das modulare Stationensystem 100 abgestimmt. Die Station 110 umfasst einen dedidizierten Eingangspuffer 111 und einen dedizierten Ausgangspuffer 112. Die Station 120 umfasst einen gemeinsamen Eingangs- und Ausgangspuffer 121. Das modulares Stationensystem 100 kann als ein modulares Montagesystem mit einer Mehrzahl von Montagestationen ausgebildet sein.

Das fahrerlose Transportsystem 10 umfasst eine Mehrzahl von fahrerlosen Fahrzeugen 20, 21, 40, 41 zum Transportieren von Transportgütern 30, 31 zu den Stationen 110, 120 des modularen Stationensystems 100. Die Transportgüter 30, 31 können als Werkstücke für ein Montagesystem ausgebildet sein.

Ferner umfasst das fahrerlose Transportsystem 10 einen oder mehrere vorbestimmte Warteplätze 50, 60, 70 und einen Parkplatz 90. Der vorbestimmte Warteplatz 50 ist als ein vorbestimmter globaler Warteplatz, der vorbestimmte Warteplatz 60 ist als ein vorbestimmter der Station 110 ausschließlich zugeordneter Warteplatz und der Warteplatz 70 ist als ein vorbestimmter dedizierter Warteplatz 70 konfiguriert.

Das fahrerlose Transportsystem 10 umfasst weiterhin eine zentrale Steuerungseinheit 80, welche konfiguriert ist, ein fahrerloses Fahrzeug 20, 21 oder jedes fahrerlose Fahrzeug 20, 21, 40, 41 automatisch zu steuern.

Zu dem fahrerlosen Transportsystem 10 gehört auch eine Mehrzahl von Sensoren 81, welche jeweils einer Station 110, 120 zugeordnet sind. Mit den Sensoren 81 ist das fahrerlose Transportsystem 10 konfiguriert zu erfassen, ob ein dedizierter Eingangspuffer 111 der Station 110 oder ein gemeinsamer Eingangs- und Ausgangspuffer 121 der Station 120 frei oder blockiert ist.

Die fahrerlosen Fahrzeuge 20, 21, 40, 41 und die Sensoren 81 sind mit der zentralen Steuerungseinheit 80 über ein drahtloses Netzwerk 200 verbunden, welches beispielhaft und nicht einschränkend als ein Mobilfunknetz ausgebildet ist.

Das fahrerlose Transportsystem 10 ist konfiguriert, im Betrieb das folgende Verfahren auszuführen.

Die zentrale Steuerungseinheit 80 des fahrerlosen Transportsystems 10 steuert die fahrerlosen Fahrzeuge 20, 21, 40, 41 des fahrerlosen Transportsystems 10 automatisch.

Das fahrerlose Fahrzeug 20 des fahrerlosen Transportsystems 10 transportiert ein Transportgut 30 zu der Station 110 des modularen Stationensystems 100. Das fahrerlose Fahrzeug 20 liefert das Transportgut 30 an der Station 110 ab, wenn ein Abliefern des Transportguts 30 an der Station 110 möglich ist.

Das weitere fahrerlose Fahrzeug 40 ist in dem dedizierten Eingangspuffer 111 der Station 110 angeordnet und wird von dem dem dedizierten Eingangspuffer 111 zugeordneten Sensor 81 erfasst. Das weitere Fahrzeug 40 verhindert das Abliefern des Transportguts 30 durch Blockieren des dedizierten Eingangspuffers 111 der Station 110.

Wenn ein Abliefern des Transportguts 30 an der Station 110 wie hier gezeigt verhindert ist, fährt das fahrerlose Fahrzeug 20 mit dem Transportgut 30 zu dem vorbestimmten Warteplatz 60, 70 des fahrerlosen Transportsystems 10. Das fahrerlose Fahrzeug 20 fährt genauer gesagt zu dem vorbestimmten der Station 110 ausschließlich zugeordneten Warteplatz 60, welcher gleichzeitig der dedizierte Warteplatz 70 ist. Das fahrerlose Fahrzeug 20 wartet mit dem Transportgut 30 auf dem vorbestimmten Warteplatz 60, 70, bis ein Abliefern des Transportguts 30 an der Station 110 ermöglicht ist, und transportiert das Transportgut 30 nach dem Warten zu der Station 110.

Das fahrerlose Fahrzeug 21 des fahrerlosen Transportsystems 10 transportiert ein Transportgut 31 zu der Station 120 des modularen Stationensystems 100. Das fahrerlose Fahrzeug 21 liefert das Transportgut 31 an der Station 110 ab, wenn ein Abliefern des Transportguts 31 an der Station 120 möglich ist.

Das weitere Fahrzeug 41 ist in dem gemeinsamen Eingangs- und Ausgangspuffer 121 der Station 120 angeordnet und wird von dem dem gemeinsamen Eingangs- und Ausgangspuffer 121 zugeordneten Sensor 81 erfasst. Das weitere fahrerlose Fahrzeug 41 verhindert das Abliefern durch Blockieren des gemeinsamen Eingangs- und Ausgangspuffers 121 der Station 120.

Wenn ein Abliefern des Transportguts 31 an der Station 120 wie hier gezeigt verhindert ist, fährt das fahrerlose Fahrzeug 21 mit dem Transportgut 31 zu dem vorbestimmten Warteplatz 50, 90, des fahrerlosen Transportsystems 10. Das Fahrzeug 21 fährt genauer gesagt zu dem vorbestimmten globalen Warteplatz 50, welcher gleichzeitig der Parkplatz 90 ist. Das fahrerlose Fahrzeug 21 wartet mit dem Transportgut 31 auf dem vorbestimmten Warteplatz 50, 90 bis ein Abliefern des Transportguts 31 an der Station 120 ermöglicht ist, und transportiert das Transportgut 31 nach dem Warten zu der Station 120.

### BEZUGSZEICHENLISTE:

- 10: Fahrerloses Transportsystem (FTS)
- 20: fahrerloses Fahrzeug (FTF)
- 21: fahrerloses Fahrzeug (FTF)
- 30: Transportgut
- 31: Transportgut
- 40: weiteres fahrerloses Fahrzeug
- 41: weiteres fahrerloses Fahrzeug
- 50: globaler Warteplatz
- 60: einer Station ausschließlich zugeordneter Warteplatz
- 70: dedizierter Warteplatz
- 80: Steuerungseinheit
- 81: Sensor
- 90: Parkplatz
- 100: modulares Stationensystem
- 110: Station
- 111: dedizierter Eingangspuffer
- 112: dedizierter Ausgangspuffer
- 120: Station
- 121: gemeinsamer Eingangs- und Ausgangspuffer
- 200: drahtloses Netzwerk

## Patentansprüche

1. Verfahren zum Betreiben eines fahrerlosen Transportsystems (10), bei dem
- ein fahrerloses Fahrzeug (20 eines fahrerlosen Transportsystems (10) ein Transportgut (30) zu einer Station (110) eines modularen Stationensystems (100) transportiert; und
- das fahrerlose Fahrzeug (20, 21) das Transportgut (30) an der Station (110) abliefert, wenn ein Abliefern des Transportguts (30) an der Station (110, 120) möglich ist; und bei dem
- das fahrerlose Fahrzeug (20, 21) mit dem Transportgut (30) zu einem vorbestimmten Warteplatz (50, 60, 70) des fahrerlosen Transportsystems (10) fährt, wenn ein Abliefern des Transportguts (30) an der Station (110, 120) verhindert ist; und
- das fahrerlose Fahrzeug (20, 21) mit dem Transportgut (30) auf dem vorbestimmten Warteplatz (50, 60, 70) wartet, bis ein Abliefern des Transportguts (30) an der Station (110, 120) ermöglicht ist, und das Transportgut (30) nach dem Warten zu der Station (110, 120) transportiert.

2. Verfahren nach Anspruch 1, bei dem ein weiteres fahrerloses Fahrzeug (40, 41) das Abliefern des Transportguts (30) durch Blockieren eines dedizierten Eingangspuffers (111) der Station (110) verhindert.

3. Verfahren nach einem der Ansprüche 1 oder 2, bei dem ein weiteres fahrerloses Fahrzeug (40, 41) das Abliefern durch Blockieren eines gemeinsamen Eingangs- und Ausgangspuffers (121) der Station (120) verhindert.

4. Verfahren nach einem der Ansprüche 1 bis 3, bei dem das fahrerlose Fahrzeug (20, 21) zu einem vorbestimmten globalen Warteplatz (50) oder einem vorbestimmten der Station (110) ausschließlich zugeordneten Warteplatz (60) fährt.

5. Verfahren nach einem der Ansprüche 1 bis 4, bei dem das Fahrzeug (20, 21) zu einem vorbestimmten dedizierten Warteplatz (70) fährt.

6. Verfahren nach einem der Ansprüche 1 bis 5, bei dem eine zentrale Steuerungseinheit (80) des fahrerlosen Transportsystems (10) das fahrerlose Fahrzeug (20, 21) oder eine Mehrzahl von fahrerlosen Fahrzeugen (20, 40) des fahrerlosen Transportsystems (10) automatisch steuert.

7. Fahrerloses Transportsystem (10) für ein modulares Stationensystem (100), welches eine Mehrzahl von fahrerlosen Fahrzeugen (20, 40) zum Transportieren von Transportgütern (30) zu Stationen (110, 120) eines modularen Stationensystems (100) und einen vorbestimmten Warteplatz (50, 60, 70) umfasst und konfiguriert ist, ein Verfahren nach einem der Ansprüche 1 bis 6 auszuführen.

8. Fahrerloses Transportsystem nach Anspruch 7, welches konfiguriert ist zu erfassen, ob ein dedizierter Eingangspuffer (111) einer Station (110) oder ein gemeinsamer Eingangs- und Ausgangspuffer (121) einer Station (120) frei oder blockiert ist.

9. Fahrerloses Transportsystem nach einem der Ansprüche 7 oder 8, bei dem der vorbestimmte Warteplatz (50, 60, 70) als ein vorbestimmter globaler Warteplatz (50) oder ein vorbestimmter der Station (110, 120) ausschließlich zugeordneter Warteplatz (60) oder ein vorbestimmter dedizierter Warteplatz (70) konfiguriert ist.

10. Fahrerloses Transportsystem nach einem der Ansprüche 7 bis 9, mit einer Mehrzahl von vorbestimmten Warteplätzen (50, 60, 70) oder einer zentralen Steuerungseinheit (80), welche konfiguriert ist, ein fahrerloses Fahrzeug (20, 21) oder jedes fahrerlose Fahrzeug (20, 30) automatisch zu steuern.
